# EUROPEAN PATENT SPECIFICATION

(11) **EP 2 944 000 B1**
(45) Date of publication and mention of the grant of the patent: **04.10.2017**
(21) Application number: 13700558.3
(22) Date of filing: 14.01.2013
(51) Int. Cl.: H01R 13/53, H02G 15/06, H01R 31/02, H01R 13/02, H01R 13/502, H01R 11/12, H01R 4/50, H01R 4/64, H02G 15/064, H02G 15/18

(54) **DISCONNECTABLE CABLE JOINTS WITH THREE SOCKETS**
LÖSBARE KABELVERBINDUNGEN MIT DREI STECKDOSEN
JONCTIONS DE CÂBLES DÉBRANCHABLES AVEC TROIS PRISES

(43) Date of publication of application: 18.11.2015
(73) Proprietor: Tyco Electronics Raychem GmbH, 85521 Ottobrunn (DE)
(72) Inventor: SIMONSOHN, Thilo, 81735 Munich (DE)
(74) Representative: Patentanwaltskanzlei WILHELM & BECK
(86) International application number: PCT/EP2013/050591
(87) International publication number: WO 2014/108213

(56) References cited:
- EP-A1- 0 147 979
- FR-A1- 2 686 195
- GB-A- 2 188 496
- US-A- 3 585 568
- US-A- 3 980 374

## Description

The invention refers to a disconnectable cable joint with three sockets according to claim 1.

Cable connectors with several sockets are disclosed in US 4,865,559 and in EP 0 510 019 B1**.**

US 3,585,568 A discloses a disconnectable cable joint with a housing comprising insulating material, wherein the housing comprises at least three sockets, wherein the first socket is provided for receiving a plug, wherein the second and the third socket are provided for mounting cables to the housing connecting a conductor of the cable with a contact member.

The object of the new disconnectable cable joint is to provide a slim and robust design for low-cost disconnectable cable joints allowing connection, disconnection and earthing of cables without a cable movement.

In accordance with one aspect of the present invention, a disconnectable cable joint is provided with a housing comprising three sockets, wherein a first socket is proposed for mounting a plug and a second and third socket are disposed for mounting two cables. Furthermore, two contact members are disposed which protrude from the third socket and the second in the first socket. Via the plug and the two contact members, the mounted cables can be electrically connected or electrically insulated or earthed from one another without the need to physically remove or disconnect the cables from the joint. According to the invention, a contact member for each cable is provided, which is in contact with the mounted cable and which is in contact with the mounted plug. An electrical connection between the cable or a disconnection or earthing can simply be performed by removing and exchanging the plug from the joint. For this reason, it is not necessary to move the cables which may be fixed in the ground or to a wall and/or that may have a heavy weight or high rigidity so that moving the cables is not easy. The disconnectable cable joint has the advantage that the second and third socket can be arranged in any plane or angle related to each other and to the first socket.

Further embodiments of the disconnectable cable joint are disclosed in the dependent claims.

In accordance with a further aspect, the sockets are arranged in one plane, wherein the second and the third socket are arranged in opposite directions or in the same direction. This embodiment allows for a slim design of the joint which may also allow for an inline joint of the cables.

In a further embodiment of the disconnectable cable joint, the longitudinal axis of the three sockets are arranged in parallel. This provides a simple and slim design, also allowing for an inline connection of the cables.

In a further embodiment, the disconnectable cable joint comprises a first socket which is arranged in an angle larger than 10°, e.g. 90° to a longitudinal axis of the second and/or the third socket. This embodiment allows for an inline joint of the cables and an access to the plug from the side. This embodiment may be of advantage if the disconnectable cable joint is buried in the ground, allowing for an access to the plug from above. Sockets can of course be arranged in different planes, e.g. if branching cables are coming from the side.

In a further embodiment of the disconnectable cable joint, more than two sockets for mounting a cable are provided. For example, three cables may be mounted to the disconnectable cable joint wherein the disconnectable cable joint is embodied to allow for an electrical connection between the three cables or an electrical connection between two of the three cables or an electrical insulation of the three cables or any further type of connection, disconnection, isolating and/or earthing.

In a further embodiment of the disconnectable cable joint, the longitudinal axis of the first and the second contact member are arranged in parallel or in an inclined manner in a predefined angle with regard to each other. Depending on the orientation of the first and second contact member with regard to each other, different mounting situations for the cables may be provided. For example, the two cables can be arranged in one line or in parallel in different axes or in different orientations respective to their longitudinal axes.

In a further embodiment, a contact member may be provided which protrudes into a first, a second and a fourth socket providing contact faces for two conductors of the cables and for the plug. This embodiment can be used if two cables should always be on the same voltage level. Using only one contact member for electrically connecting two cables provides a simple and cheap embodiment of the disconnectable cable joint.

In a further embodiment, the contact member is arranged in a conducting cage, i.e. a Faraday cage wherein the cage provides openings for the conductor of the cable and for the plug. The provision of the conducting cage improves the electrical insulation and reduces the electrical field stress within the housing of the disconnectable cable joint.

In a further embodiment, the first socket is arranged in line with the second socket. This embodiment provides a disconnectable cable joint with a low height which can be used if there is only little space above the longitudinal axes of the cables for the arrangement of the plug.

In a further embodiment, the housing at least partially comprises a shell preferably made of a material which is stiffer than the material of the housing. This shell supports the shape of the housing and particularly the shape of the first socket. Due to the two different materials - one for the housing and one for the shell - the different materials can be optimized for the main functions. The main function of the housing is to insulate the cables and the plug and the contact members from each other. The main function of the shell is to improve the stability of the housing and/or to seal against the environment (e.g. water, substances, pressure, puncture or the like).

In a further embodiment, the disconnectable cable joint is arranged in a container wherein the second and the third socket protrude into openings of the container, wherein a fill material can be arranged between the disconnectable cable joint and the container, protecting the connector and/or sealing the container. The first socket may protrude into the further opening in order to be able to exchange plugs. In another embodiment, the first socket may be accessible after the container is opened.

This protects the disconnectable cable joint from moisture and dust. The container may protect the disconnectable cable joint against damages which may arise if the tube and the disconnectable cable joint are buried in the ground.

In a further embodiment of the disconnectable cable joint which is arranged in the tube, there may be free space above the disconnectable cable joint which is filled up with a fill member. The fill member may fill up the free space in an upper section of the tube preventing soiling of the free space of the tube. The fill member may be arranged on top of a cap of the disconnectable cable joint, which covers the first section and the plug.

Disconnectable cable joints in accordance with the present invention will now be described, by way of example, with reference to the accompanying drawings, in which:
Figure 1 shows a first embodiment of a disconnectable cable joint;
Figure 2 shows a schematic view of a contact member;
Figure 3 depicts, in a schematic view, a second contact member;
Figure 4 shows a second embodiment of the joint;
Figure 5 depicts a third contact member;
Figure 6 shows a third embodiment of the disconnectable cable joint;
Figure 7 illustrates a schematic cross-sectional view of the disconnectable cable joint of Figure 6;
Figure 8 shows a fourth embodiment of a disconnectable cable joint;
Figure 9 depicts a schematic cross-sectional view of the disconnectable cable joint of Figure 8;
Figure 10 shows a fifth embodiment of the disconnectable cable joint in a schematic view;
Figure 11 depicts a sixth embodiment of the disconnectable cable joint in a schematic view;
Figure 12 shows a seventh embodiment of a disconnectable cable joint;
Figure 13 shows a schematic perspective view of a further contact member;
Figure 14 depicts an eighth embodiment of a disconnectable cable joint;
Figure 15 shows a ninth embodiment of the disconnectable cable joint;
Figure 16 shows a tenth embodiment of the disconnectable cable joint;
Figure 17 shows an eleventh embodiment of the disconnectable cable joint;
Figure 18 depicts a disconnectable cable joint arranged in a container with an additional tube on the side with the first socket; and
Figures 19 to 21 show three different embodiments of the plug.

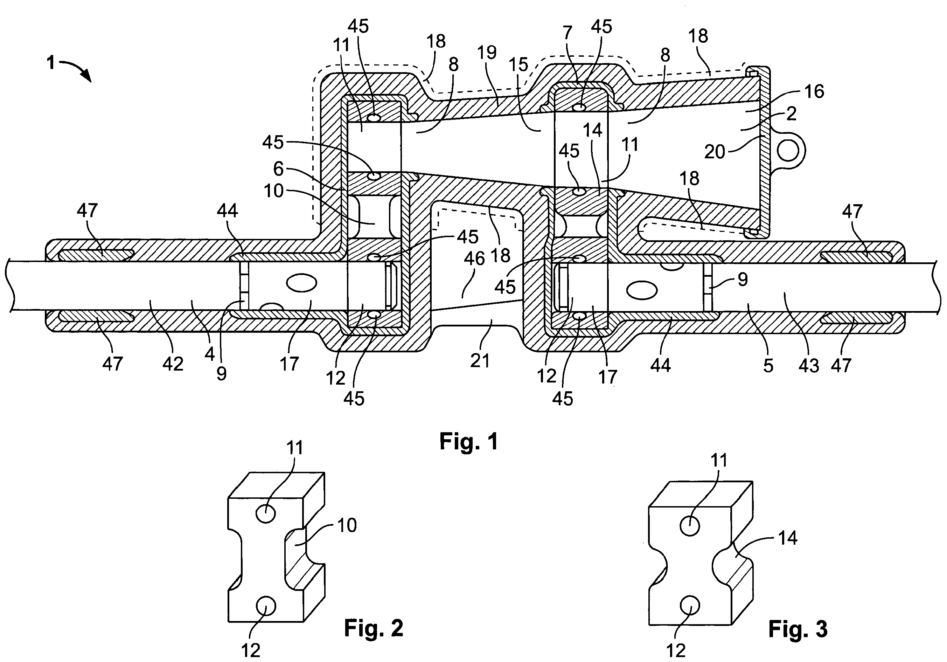

With reference to Figure 1, a disconnectable cable joint 1 comprises a housing 19 with three sockets 2, 4, 5. The first socket 2 is disposed for receiving a plug 16. The disconnectable cable joint 1 comprises a first electrical contact member 10 which adjoins the first and the second socket 2, 4. The second socket 4 is disposed for receiving an ending of a first cable 42. The first contact member 10 is arranged within a first electrical cage 6. The first electrical cage 6 comprises a first opening 8 in the first socket 2 for receiving a section of the plug 16. The first cage 6 comprises a second opening 9 which is arranged within the second socket 4 and which is provided for receiving a connector and a short section of the first cable 42 that is connected to an electrical conductor of the first cable 42. The first electrical cage 6 embodies a Faraday cage and improves the electrical stress in the insulation of the housing 19 of the disconnectable cable joint. Depending on the used embodiment, the cage 6 can be omitted. The housing 19 is made of electrically insulating material, e.g. plastic or rubbers (e.g. EPDM) or silicones or thermoplastic elastomers or the like. Longitudinal axes of the first and the second socket 2, 4 are arranged in parallel at a given distance. The longitudinal axis of the third socket 5 is arranged in line with the longitudinal axis of the second socket 4. In the shown embodiment, the second and third socket are oriented in opposite directions, facing away from the disconnectable cable joint 1.

A second electrical cage 7 is disposed, wherein a second opening 9 of the second cage 7 is arranged within the third socket 5. A first and a third opening 8, 15 of the second cage 7 are arranged in the first socket 2. The first and third opening 8, 15 are disposed for the plug which protrudes into the second cage 7. Within the second cage 7, a second electrical contact member 14 is disposed. The second contact member 14 comprises a first contact opening 11 which is arranged within the first socket 2. The second contact member 14 comprises a second contact opening 12 which is arranged within the third socket 5. The third socket 5 is disposed for receiving a second cable 43, wherein an end 17 of a conductor of the second cable 43 is arranged within the second contact opening 12 of the second contact member 14. The end 17 of the conductor may also be electrically connected to a receiving section 44 of the second cage 7. The receiving section 44 is e.g. embodied as a sleeve, receiving a cylindrical connector 17 of the conductor of the second cable 43 and a short section of the cable insulation of the cable 43.

In order to improve the electrical connection between the ending 17 of cable 43 and/or the second contact member 14, contact elements 45 may be provided. The contact elements 45 may for example be embodied as electrically conducting spring elements. Also, contact elements 45 may be disposed between the plug 16 and the second contact member 14. Moreover, contact elements 45 may be disposed between the first contact member 10 and the plug 16 and/or between the first contact member 10 and the ending 17 of the electrical conductor of the first cable 42. Furthermore, the first contact member 10 may comprise a thread within the first contact opening 11. In this embodiment, the plug 16 may also comprise a thread at its end. Thus, the plug 16 can be screwed into the first contact member 10.

Also, the first cage 6 may comprise a receiving section 44 which is arranged in the second socket 4 and which encompasses the end 17 of the conductor of the first cable 42 and a section of the cable insulation. The first, the second and the third socket 2, 4, 5 are arranged in the shown embodiment of Figure 1 in one plane. The first and the second cage 6, 7 are embodied in an almost identical manner, wherein the second cage 7 comprises two openings 8, 15 in the first socket 2, whereas the first cage 6 comprises only one opening 8 in the first socket 2. The first and the second electrical cages 6, 7 may be made of metallic material. Other preferable options are to make the first and second cage from flexible materials e.g. EPDM, silicones; TPEs. Further, the material selected could be similar to the material of the housing 19. Also, the first and the second contact member 10, 14 may be made of metallic material which is electrically conductive.

In the shown embodiment, the first and the second contact member 10, 14 are arranged in parallel to each other, wherein a longitudinal axis of the first and the second contact member 10, 14 are inclined by 90° to a longitudinal axis of the first socket 2 and the longitudinal axes of the second and third socket 4, 5. The openings of the second and third socket 4, 5 are arranged at opposite sides of the disconnectable cable joint 1.

The first socket 2 is closed by a cap 20 which may be fixed to the housing 19. The housing 19 covers the first and the second cages 6, 7, wherein a free space 46 is available between parts of the housing covering the lower parts of the cages 6, 7. Depending on the used embodiment, there may be a stay 21 which connects the two housing parts covering the lower sections of the first and second cages 6, 7.

The ends 17 of the conductors of the first and the second cable 42, 43 are each electrically connected to the respective first or second contact member 10, 14. The housing 19 is made of electrically insulating material. For this reason, without a plug 16 the two conductors of the two cables 42, 43 are not electrically connected. If an electrical connection between the conductors of the two cables 42, 43 is required, an electrically conducting plug 16 is introduced into the first socket 2. The mounted plug 16 is in contact with the first and the second contact member 10, 14, electrically connecting the two contact members 10, 14. In this embodiment, the plug 16 may be at least partially made of metallic material. If an electrical disconnection of the two cables is required, the cap 20 is removed and the plug 16 is removed from the first socket 2. The first socket 2 comprises an inner tapering and a frusto-conical configuration. The plug 16 is respectively tapered and has a frusto-conical configuration. Due to the frusto-conical shape of the plug 16, the first contact opening of the second contact member 14 has a larger cross-sectional area than the first contact opening 11 of the first contact member 10. The second and third socket 4, 5 may have a cylindrical shape.

Depending on the used embodiment, stress cones 47 may be arranged in the housing 19 adjacent to the second and third socket 4, 5. In other embodiments the openings 4, 5 may not have stress cones 47, but adapters with stress cones are used that are mounted onto the cables 42, 43 and are inserted into openings 4, 5. Furthermore, a shell 18 may be disposed covering at least a part of the outer face of the housing 19. The shell may be made of a stiffer material than the housing 19. The usage of the shell improves the stiffness of the housing and improve the shape of the first socket 2. The shell may be made of metallic material. The material and dimensions of the housing may be selected in such a way that the joint generates a radial pressing force on the plug 16 and/or ends 17 of the conductor of the cables 42, 43. However, the pressing force should not be too high. Thus, it is of advantage to use a smooth material for the housing and to use a stiffer shell 18 to stabilize the shape of the disconnectable cable joint.

Figure 2 shows, in a schematic view, the first contact member 10 with the first and the second contact opening 11, 12. In a schematic view, Figure 3 shows the second contact member 14 with the first and the second contact opening 11, 12. As discussed above, the first contact opening 11 of the second contact member 14 has a larger cross-sectional area than the first contact opening 11 of the first contact member 10.

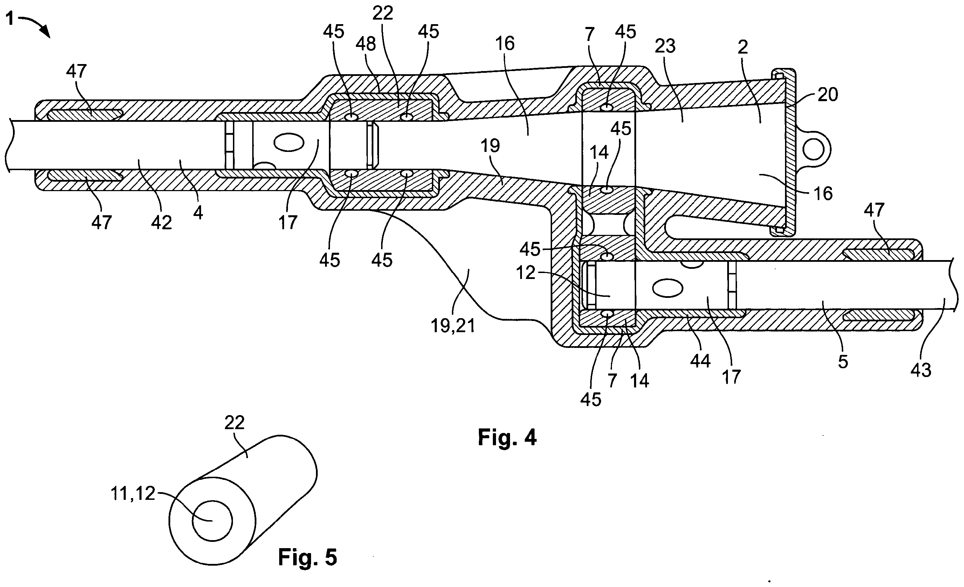

Figure 4 shows the second embodiment of the disconnectable cable joint 1 wherein in this embodiment the first socket 2 and the second socket 4 are arranged on a common longitudinal axis 23. The longitudinal axis of the third socket 5 and the first socket 2 are arranged in parallel. The second and third socket 4, 5 point in opposite directions with regard to the disconnectable cable joint 1. Also, in this embodiment, the first, second and third socket 2, 4, 5 are arranged in one plane. The second contact member 14 and the second cage 7 are the same as in Figure 1. However, instead of the first contact member, a third contact member 22 is disposed which is embodied as a sleeve. The third contact member 22 receives an end 17 of the conductor of the first cable 42 at one side. At an opposite side, the third contact member 22 receives an end section of the plug 16. Additionally, contact elements 45 may be arranged in the third contact member 22 in order to improve the electrical contact between the conductor of the cable 42 and/or the plug 16. The third contact member 22 is surrounded by a third cage 48. The third electrical cage 48 embodies a Faraday cage having mainly the shape of a sleeve.

The third cage 48 has a first section which receives the end 17 of the conductor of the first cable 42 and a section of the cable insulation and a second section encompassing the third contact member 22 and a section to receive a part of the plug 16. The second section has a larger cross-sectional area than the first section. Like said with reference to figure 1 the second section could have a thread for receiving the plug which may be a lower cost solution than using contacts 45.

Figure 5 shows a schematic view of the third contact member 22 embodied as a sleeve.

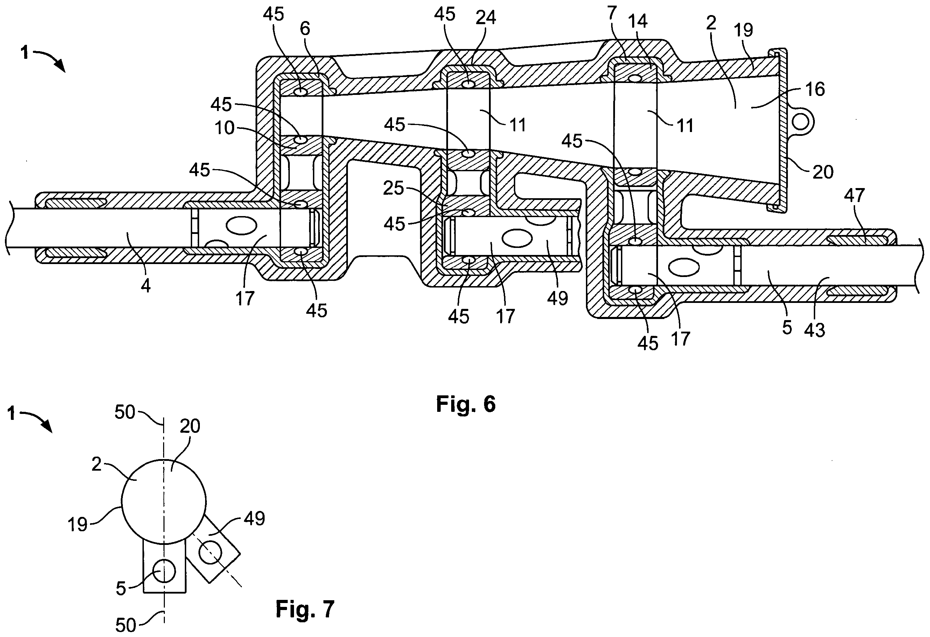

Figure 6 shows a third embodiment of the disconnectable cable joint 1 which has basically the same structure as the disconnectable cable joint of Figure 1, wherein a fourth socket 49 is arranged between the first and the second socket 2, 4. The fourth socket 49 comprises a fourth cage 24 and a fourth contact member 25. The fourth contact member 25 is embodied with a shape similar to the second contact member 14. Moreover, the fourth cage 24 is embodied in a similar shape as the second cage 7. A cross-sectional area of the first contact opening 11 of the fourth contact member 25 is smaller than the first contact opening 11 of the second contact member 14. Furthermore, in this embodiment, a longitudinal axis of the second socket 4 is arranged in parallel to the longitudinal axis of the third socket 5 but has a predetermined distance. The first and the second and third socket 2, 4, 5 are arranged in one plane. The fourth socket 49 is arranged beside the shared plane of the second and the third socket 4, 5. Further options are to arrange all four sockets in any other planes and the axes might be parallel or have any other angle.

This can be seen in the schematic cross-sectional view of Figure 7. Figure 7 shows a schematic view of the opening of the first socket 2, wherein a shared plane 50 of the first, second and third socket 2, 4, 5 is depicted as a dashed line. The fourth socket 49 is arranged beside the second and third socket 4, 5. The third socket 49 is provided for receiving an end 17 of a conductor of a third cable. As can be seen from Figure 7, the fourth contact member 25 is arranged at an angle with regard to the common plane 50. The embodiment shown in Figure 6 allows for the possibility of connecting , disconnecting or earthing one, two as all three cables in any possible combination.

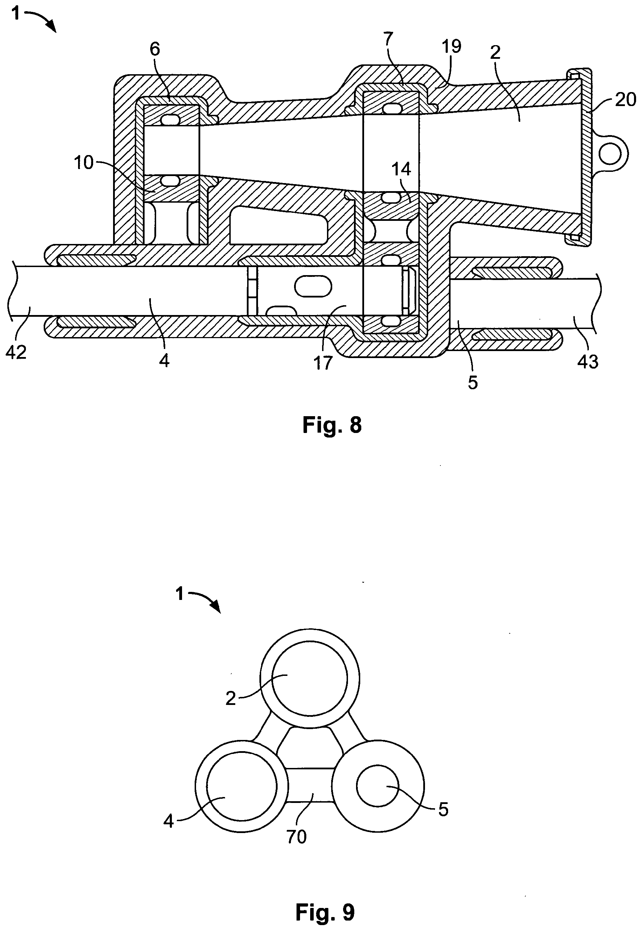

Figure 8 shows a further embodiment of the disconnectable cable joint 1 which is basically embodied as the disconnectable cable joint 1 of Figure 1, wherein the second and third socket 4, 5 are directed in opposite directions and wherein the second and third socket 4, 5 are not arranged in the same plane.

Figure 9 shows a schematic side view of the opening of the first socket 2 and the opening of the second socket 4. The first and second contact member are inclined with regard to each other at a predetermined angle of about 45°. The additional stay 70 as well as additional stays may increase the rigidity of the joint.

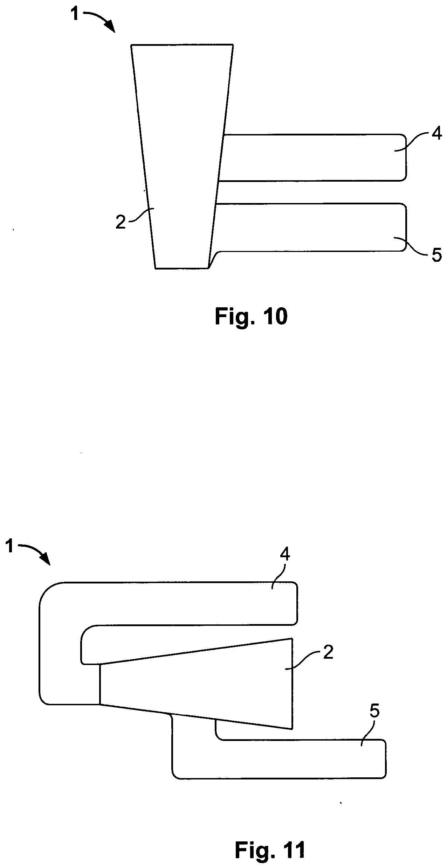

Figure 10 shows, in a schematic view, a further embodiment of the disconnectable cable joint 1, wherein the first socket 2 is arranged perpendicularly to a longitudinal axis of the second socket 4 and the third socket 5. The second socket 4 and the third socket 5 are arranged in parallel. The basic structure of the disconnectable cable joint of Figure 10 is the same as shown in Figure 1.

Figure 11 shows another embodiment of a disconnectable cable joint 1 which basically has the same structure as the disconnectable cable joint 1 wherein the second and third socket 4, 5 are disposed in one plane with the first socket 2. All sockets are on the same side.

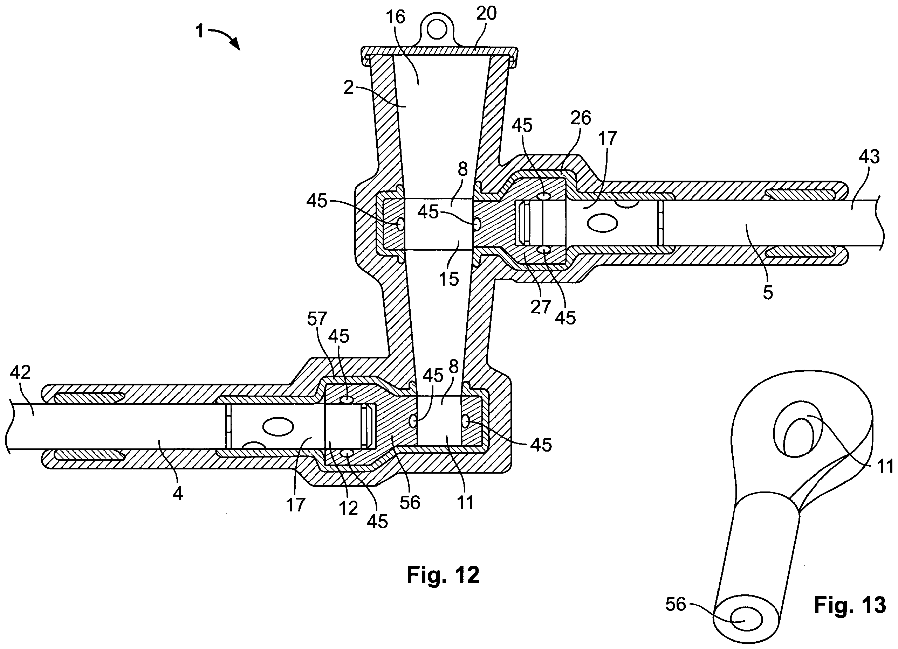

Figure 12 shows a further embodiment of the disconnectable cable joint wherein the first socket 2 is arranged perpendicularly to the second and the third socket 4, 5. The second and third socket 4, 5 point in opposite directions. The disconnectable cable joint 1 comprises a tenth electrical cage 57 and a tenth electrical contact member 56 which provide the electrical contact for the second socket 4. The tenth contact member 56 is with a longitudinal axis perpendicularly disposed to a longitudinal axis of the first socket 2. The tenth contact member 56 comprises a first contact opening 11 for receiving an end part of the plug 16. In addition, the tenth contact member 56 comprises a second contact opening 12 which is arranged with a longitudinal axis along the longitudinal axis of the second socket 4. The third socket 5 comprises a fifth electrical contact member 27 which is arranged within a fifth electrical cage 26. The fifth contact member 27 is embodied in the same shape as the fourth contact member 25, wherein the first contact opening 11 has a larger cross-sectional area. The fifth cage 26 is embodied in the same shape as the tenth cage 57 wherein the fifth cage 26 has a first and a third opening 8, 15. The tenth cage 57 only has a first opening 8. Between the plug 16 and the tenth and/or the fifth contact member 56, 27, contact elements 45 may be arranged. Moreover, between the ends 17 of the conductor of the cables 42, 43, contact elements 45 may be arranged. The embodiment of Figure 12 has the advantage that the cables 42, 43 may be buried in the ground or in a tunnel or in a tower and the first socket 2 which receives the plug 16 and which is covered by the cap 20 can be reached from above. Thus, an easy access to the first socket 2 and the plug 16 is possible.

Figure 13 shows, in a schematic perspective view, a tenth contact member 56 with the first and the second contact opening 11, 12. In this embodiment as shown in Figure 12, the second contact opening 12 is embodied as a blind hole.

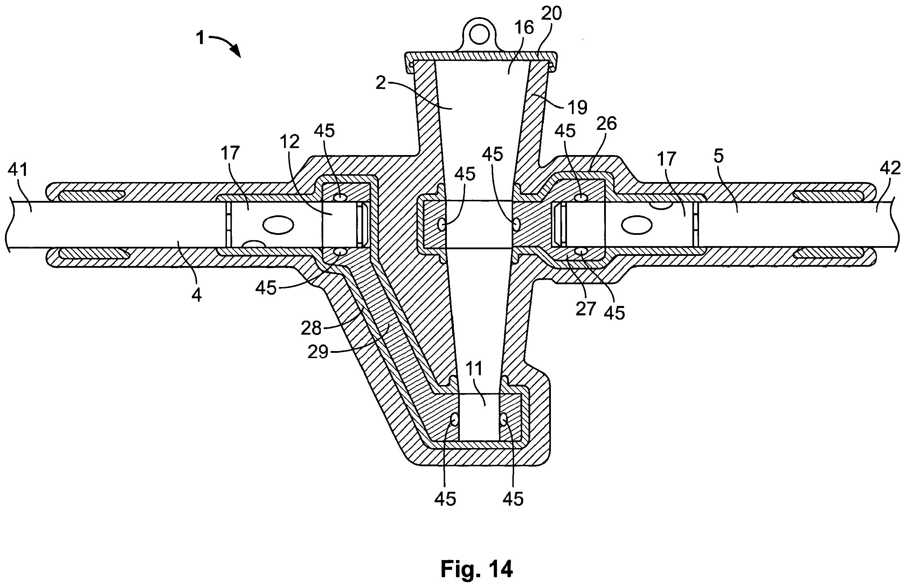

Figure 14 shows a further embodiment of a disconnectable cable joint wherein the second and third socket 4, 5 are arranged at opposite sides of the first socket 2. In this embodiment, the second socket 4 is disposed on the same axis as the third socket 5. The third socket 5 is embodied as shown in Figure 12. The second socket 4 comprises a sixth electrical contact member 29 which is arranged within a sixth electrical cage 28. The sixth contact member 29 comprises a first contact opening 11 for receiving an end part of the plug 16 and a second opening 12 for receiving an end 17 of a conductor of the first cable 42. The sixth contact member 29 is embodied as an arm with the two contact openings 11, 12 at the two endings of the arm. The two contact openings 11, 12 are embodied as cylindrical holes wherein the longitudinal axes are arranged at an angle of 90° with regard to each other. Thus, it is possible to receive a part of the plug 16 by means of the first contact opening 11, and to receive the end 17 of the conductor of the first cable 41 by means of the second contact opening 12. Also, the second socket 4 is arranged at an angle of 90° with regard to the longitudinal axis of the first socket 2. The sixth cage 28 covers the whole sixth contact member 29 and provides a cylindrical receiving section for the end 17 of the conductor of the first cable 42 in the second socket 4. In the shown embodiment, the sixth contact member 29 is guided to an end section of the first socket 2. However, this is not necessary. It is sufficient if the sixth contact member 29 is guided to the first socket 2 on a different level than the fifth contact member 27. In further embodiments, the axis of the second and third socket 4, 5 may be arranged in a non-aligned execution, e.g. with an angle of 45° or 90°.

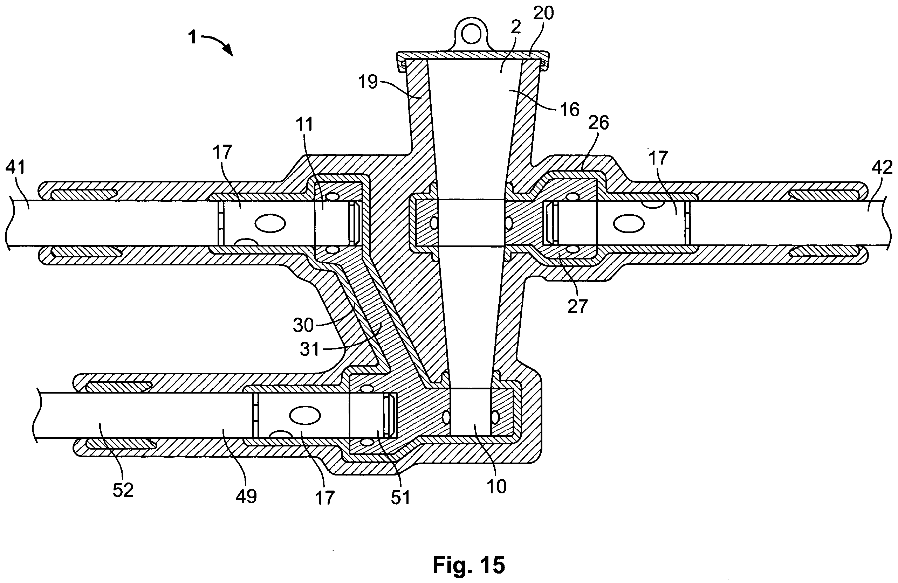

Figure 15 shows a further embodiment of the disconnectable cable joint 1 which basically comprises the same structure as the disconnectable cable joint of Figure 14, wherein a fourth socket 49 is disposed which is arranged in parallel to the second socket 4 and in the same plane as the second and third socket 4, 5. In this embodiment, a seventh electrical contact member 31 is provided which basically has the same structure as the sixth contact member 29 and additionally comprises a third contact opening 51 for receiving an end 17 of a conductor of a third cable 52 and a section of the cable insulation. A seventh electrical cage 30 encompasses the seventh contact member 31 which provides a receiving section for the end 17 of the first cable 41 and a second receiving section for the end of the conductor of the third cable 52. The second receiving section is arranged in the fourth socket 49. A longitudinal axis of the fourth socket 49 is arranged perpendicularly to the longitudinal axis of the first socket 2. Depending on the used embodiment, the sockets may also be directed to different angles around to longitudinal axis of the first socket 2 and in different planes.

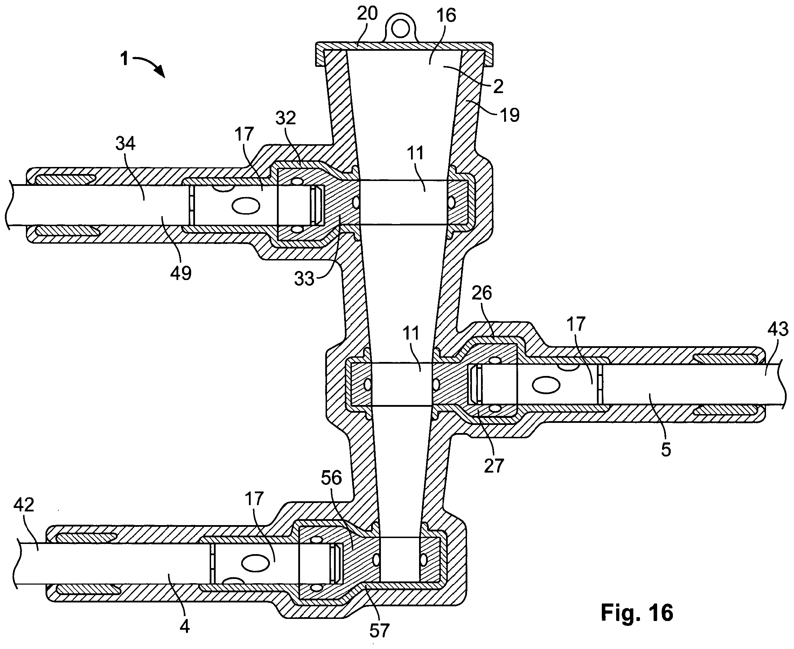

Figure 16 shows a further embodiment of a disconnectable cable joint 1 which basically has the same structure as the disconnectable cable joint 1 of Figure 12, wherein a fourth socket 49 is additionally arranged for receiving an end 17 of a conductor of a third cable 34. A longitudinal axis of the fourth socket 49 is arranged in parallel to a longitudinal axis of the second and third socket 4, 5. An eighth electrical contact member 33 is arranged within the fourth socket 49. The eighth contact member 33 is surrounded by an eighth electrical cage 32. The eighth contact member 33 is embodied with the same structure as the fifth contact member 27. The eighth cage 32 is embodied with the same structure as the fifth cage 26. Due to the frusto-conical shape of the first socket 2, the first contact opening 11 of the eighth contact member 33 has a larger cross-sectional area than the first contact opening 11 of the fifth contact member 27. In this embodiment, three cables may be mounted to the disconnectable cable joint 1. The four sockets 2, 4, 5, 49 are arranged in one plane wherein the third socket 5 is arranged at an opposite side referring to the second and fourth socket 4, 49.

Depending on the used embodiment, the sockets may also be directed to different angles around to longitudinal axis of the first socket 2 and in different planes.

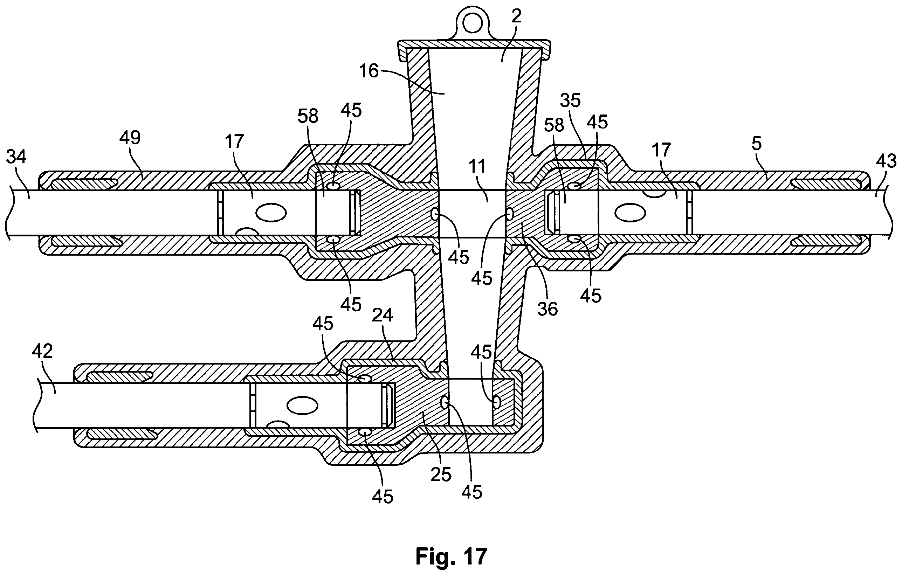

Figure 17 shows a further embodiment of a disconnectable cable joint, wherein the third and fourth socket 5, 49 are arranged at the same level of the first socket 2. This embodiment provides the possibility of using only one ninth electrical contact member 36 to electrically connect a second and third cable 43, 34, also without a plug 16 or with a modified plug like in figures 12, 14. The ninth contact member 36 comprises, at opposite sides, further contact openings 58 embodies as blind holes for receiving endings 17 of conductors of a second and a third cable 43, 34. The ninth contact member 36 comprises a first contact opening 11 for receiving the plug 16. The ninth contact member 36 is covered by a ninth electrical cage 35 which provides two receiving sections for the two endings 17 of the two cables. The disconnectable cable joint of Figure 17 provides a continuous electrical connection between the conductors of the second and third cable 43, 34 with or without the plug 16.

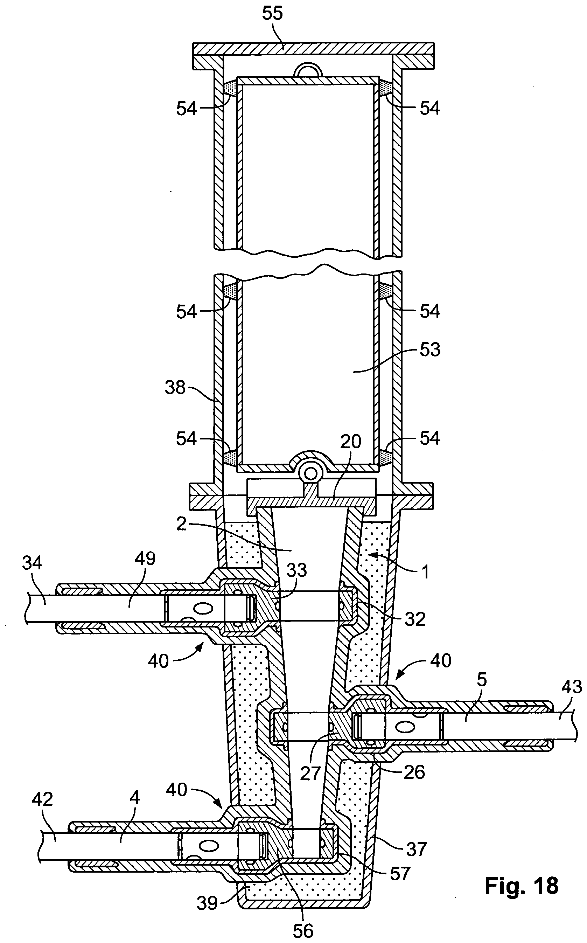

Figure 18 shows a disconnectable cable joint 1 of Figure 16 which is arranged within a container 37. The container 37 comprises a bottom with a conical tube. A longitudinal axis of the first socket 2 is arranged along the longitudinal axis of the container 37. The container 37 comprises several openings 40. The second, third and fourth socket 4, 5, 49 are guided through the respective opening 40. A free space between the disconnectable cable joint 1 and the container 37 can be filled up with filler material 39. The filler material 39 may be embodied as a resin (PUR, GURO, epoxy), an elastomeric material (e.g. silicone, EPDM or the like) preferable with low store hardness, a gel, a high viscosity liquid or concrete or such like. The filler material can also be a foamed material rather than a solid material. A certain compressibility of the filler material may be of advantage. A cross-section of the second, third and fourth socket 4, 5, 49 have the same diameter as the cross-section of the openings 40. Thus, the openings 40 are sealed by the respective sockets. In further executions openings 40 may be larger in diameter than sockets 4, 5, 49 and a separate sealing means e.g. heat shrink sleeve, cold shrink sleeve or the like is used. The filler material 39 supports the disconnectable cable joint within the container 37. Furthermore, through a filling of the container 37, waste or moisture is prevented by the filler material 39. In the shown embodiment, the container 37 comprises an access tube 38 above the disconnectable cable joint 1, wherein within the access tube 38, a fill member 53 is arranged. The fill member 53 may comprise a cylindrical cross-section as the access tube 38. The fill member 53, the access tube 39 and the container 37 may be made of plastic (PE, PP, PVC, ...) or metal (stainless steel) or concrete or foam from e.g. PE foam, PUR foam, EPDM foam, silicone foam or such like. The fill member 53 may comprise a rod made of rigid material, e.g. plastic covered with a foam. In this embodiment, the sealing lips 54 may be omitted wherein the sealing is achieved by a tight fit of the fill member i.e. the foam. In addition, sealing lips 54 may surround the fill member 53. The sealing lips 54 which may have the structure of a ring preventing moisture from flowing down the disconnectable cable joint and/or particles from falling down to the disconnectable cable joint during removal of the fill member 53 from the access tube. The access tube 38 is covered by a cover plate 55. In order to access the disconnectable cable joint 1, the cover plate 55 is removed from the access tube 38. The fill member 53 is then pulled out of the access tube 38, wherein the sealing lips 54 slide along an inner face of the access tube 38. The cap 20 can then be pulled off the housing 19 of the disconnectable cable joint 1. The plug 16 may subsequently be removed in order to disconnect the conductors of the three cables 42, 43, 34. Depending on the used plug 16, the conductors of the three cables are e.g. isolated from each other or e.g. two of the three cables are connected to each other or any other combination of connection, isolation and earthing. Depending on the used embodiment, the access tube 38 may be embodied as a separate piece which is fixed to the container 37.

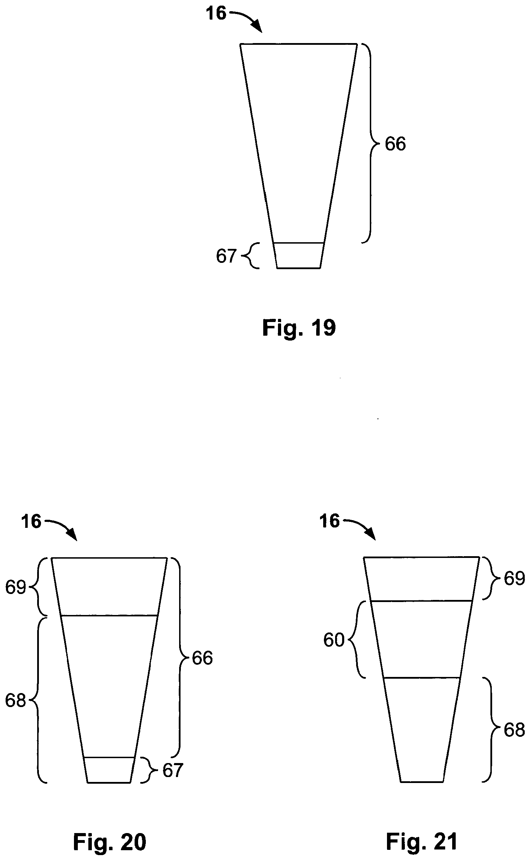

Figure 19 shows a schematic view of a first embodiment of a plug 16. The plug 16 comprises a first frusto-conical section 66 and a second cylindrical section 67. The plug 16 is as a whole configured from electrically conductive material, e.g. metal. Alternatively, the metal may be surface coated or overmolded with insulation material (e.g. epoxi resin).

Figure 20 shows a further embodiment of a plug 16 wherein a lower part 68 of the plug 16 is made of electrically conducting material. An upper part 69 of the plug 16 is made of electrically insulating material. With this kind of plug 16, all contact members which are in contact with the lower part 68 are electrically connected to each other. The contact members which are in contact with the upper part 69 are not electrically connected to further contact members.

Figure 21 shows a further embodiment of the plug 16 wherein the plug 16 is divided up into a lower part 68, a middle part 60 and an upper part 69. The different parts are made from different materials, e.g. the lower part 68 and the upper part 59 are made from insulating material. The middle part 60 may consist of electrically conducting material. In a further embodiment, the upper part 69 and the lower part 68 may be made of electrically conducting material. Depending on the used plug, different contact members and therefore different cables may be electrically connected or grounded.

In further embodiments the conductive material 60 may extend through the upper part made from insulating material. This can allow earthing of the part 60.

The disconnectable cable joint or parts of it, e.g. the sockets 4, 5, 49, may be designed in a pre-expanded condition and shrunk on the cables, or the disconnectable cable joint or parts of it, e.g. the sockets 4, 5, 49, may be designed for a push-on mounting of the cable.

The disconnectable cable joint may be built by moulding the cages and the insulation from flexible material, e.g. LSR, HTV, EPDM, TPE or the like materials or the contact members to one another in one part with rigid insulating material between e.g. epoxy resin. This assembly is then overmoulded with soft rubber, e.g. LSR, HTV, EPDM, TPE or the like soft materials to form the housing. The disconnectable cable joint may be used for high-voltage applications, e.g. in the range of 12 to 42 kV. But also for applications in the low voltage area below 1 kV or in the high voltage area. The contact members of all embodiments may also be connected to an external element, e.g. earthing means.

### Reference list

- 1: disconnectable cable joint
- 2: first socket
- 4: second socket
- 5: third socket
- 6: first cage
- 7: second cage
- 8: first opening
- 9: second opening
- 10: first electrical contact member
- 11: first contact opening
- 12: second contact opening
- 14: second contact member
- 15: third opening
- 16: plug
- 17: connector
- 18: shell
- 19: housing
- 20: cap
- 21: stay
- 22: third contact member
- 23: axis
- 24: fourth cage
- 25: fourth contact member
- 26: fifth cage
- 27: fifth contact member
- 28: sixth cage
- 29: sixth contact member
- 30: seventh cage
- 31: seventh contact member
- 32: eighth cage
- 33: eighth contact member
- 34: third cable
- 35: ninth cage
- 36: ninth contact member
- 37: container
- 38: access tube
- 39: filler material
- 40: opening
- 42: first cable
- 43: second cable
- 44: receiving section
- 45: contact element
- 46: free space
- 47: stress cone
- 48: third cage
- 49: fourth socket
- 50: shared plane
- 51: third contact opening
- 52: third cable
- 53: fill member
- 54: sealing lips
- 55: cover plate
- 56: tenth contact member
- 57: tenth cage
- 58: further contact opening
- 60: middle part
- 66: first section
- 67: second section
- 68: lower part
- 69: upper part
- 70: stay

## Claims

1. Disconnectable cable joint (1) with a housing (19) comprising insulating material, wherein the housing (19) comprises at least three sockets (2, 4, 5), wherein the first socket (2) is provided for receiving a plug (16), wherein the second and third sockets (4, 5) are provided for mounting cables (42, 43) to the housing connecting a conductor of the cable (42, 43) with a contact member (10, 14), wherein the housing (19) comprises two separate contact members (10, 14), wherein each contact member (10, 14) comprises two contact faces for being in contact with a conductor of a cable (42, 43) and with a plug (16), wherein a first contact member (10) adjoins to the first socket (2) and to the second socket (4), wherein the second contact member (14) adjoins to the first socket (2) and to the third socket (4, 5).

2. Disconnectable cable joint of claim 1, wherein depending on the structure of the plug (16), the contact members (10, 14) are insulated from one another or electrically connected or one or both can be connected to an external element e.g. earthing means.

3. Disconnectable cable joint of claim 1 or 2, wherein the sockets (2, 4, 5) are arranged in one plane, wherein openings of the second and the third socket (4, 5) are directed in opposite directions or in the same direction.

4. Disconnectable cable joint of any one of the preceding claims, wherein longitudinal axis of the three sockets (2, 4, 5) are arranged in parallel or wherein a longitudinal axis of the first socket (2) is arranged in an angle larger than 10° for example 90° to a longitudinal axis of the second and/or third socket (4, 5).

5. Disconnectable cable joint of any one of the preceding claims, wherein a fourth socket (49) is arranged, wherein a further contact member (25) is arranged, wherein the further contact member (25) protrudes from the fourth socket (49) to the first socket (2), wherein the fourth socket (49) is provided for receiving a conductor of a third cable.

6. Disconnectable cable joint of claim 5, wherein a longitudinal axis of the fourth socket (49) is arranged in parallel to at least a longitudinal axis of the second and/or the third socket (4, 5).

7. Disconnectable cable joint of one of the preceding claims, wherein a longitudinal axis of the first and second contact member (10, 14) are arranged in parallel or inclined in a predefined angle to each other.

8. Disconnectable cable joint of any one of the preceding claims, wherein a contact member (36) is arranged in the housing that protrudes to three sockets (2, 5, 49) providing contact faces for two conductors of two cables (34, 43) and for a plug (16).

9. Disconnectable cable joint of one of the preceding claims, wherein the contact member (10, 14) is arranged in a conducting cage (6, 7), wherein the cage (6, 7) provides openings (8, 15) for the plug (16).

10. Disconnectable cable joint of one of the preceding claims, wherein the first socket (2) is arranged in line with the second socket (4).

11. Disconnectable cable joint of one of the preceding claims, wherein the housing comprises at least partially a shell (18).

12. Disconnectable cable joint of one of the preceding claims, wherein the disconnectable cable joint (1) is arranged in a container (37), wherein the second and third socket (4, 5) protrude through openings (40) of the container (37), wherein a filler material (39) can be arranged between the first housing (19) and the container (37).

13. Disconnectable cable joint of claim 12, wherein the disconnectable cable joint (1) is arranged in a lower section of the container (37), wherein an upper section is filled with a fill member (53).

14. Disconnectable cable joint of one of the preceding claims, wherein a cap (2) covers the first socket (2).

15. Disconnectable cable joint of any one of the preceding claims, wherein depending on the structure of the plug an electrical connection of the sockets or an insulation of at least one socket or an earthing of at least one socket may be achieved.

## Patentansprüche

1. Lösbare Kabelverbindung (1) mit einem Gehäuse (19), das Isoliermaterial umfasst, wobei das Gehäuse (19) mindestens drei Aufnahmen (2, 4, 5) umfasst, wobei die erste Aufnahme (2) vorgesehen ist zum Aufnehmen eines Steckers (16), wobei die zweite und die dritte Aufnahme (4, 5) vorgesehen sind zum Montieren von Kabeln (42, 43) am Gehäuse, wodurch ein Leiter des Kabels (42, 43) mit einem Kontaktglied (10, 14) verbunden wird, wobei das Gehäuse (19) zwei getrennte Kontaktglieder (10, 14) umfasst, wobei jedes Kontaktglied (10, 14) zwei Kontaktflächen aufweist, um mit einem Leiter eines Kabels (42, 43) und mit einem Stecker (16) in Kontakt zu stehen, wobei ein erstes Kontaktglied (10) an die erste Aufnahme (2) und die zweite Aufnahme (4) anstößt, wobei das zweite Kontaktglied (14) an die erste Aufnahme (2) und die dritte Aufnahme (4, 5) anstößt.

2. Lösbare Kabelverbindung nach Anspruch 1, wobei die Kontaktglieder (10, 14), in Abhängigkeit von der Struktur des Steckers (16), voneinander isoliert sind oder elektrisch verbunden sind oder eines oder beide mit einem externen Element z. B. einem Erdungsmittel verbunden sein können.

3. Lösbare Kabelverbindung nach Anspruch 1 oder 2, wobei die Aufnahmen (2, 4, 5) in einer Ebene angeordnet sind, wobei Öffnungen der zweiten und der dritten Aufnahme (4, 5) in entgegengesetzten Richtungen oder in derselben Richtung ausgerichtet sind.

4. Lösbare Kabelverbindung nach einem der vorhergehenden Ansprüche, wobei die Längsachsen der drei Aufnahmen (2, 4, 5) parallel angeordnet sind oder wobei eine Längsachse der ersten Aufnahme (2) unter einem Winkel größer als 10°, beispielsweise 90°, zu einer Längsachse der zweiten und/oder der dritten Aufnahme (4, 5) angeordnet ist.

5. Lösbare Kabelverbindung nach einem der vorhergehenden Ansprüche, wobei eine vierte Aufnahme (49) angeordnet ist, wobei ein weiteres Kontaktglied (25) angeordnet ist, wobei das weitere Kontaktglied (25) von der vierten Aufnahme (49) zur ersten Aufnahme (2) hervorsteht, wobei die vierte Aufnahme (49) vorgesehen ist zum Aufnehmen eines Leiters eines dritten Kabels.

6. Lösbare Kabelverbindung nach Anspruch 5, wobei eine Längsachse der vierten Aufnahme (49) parallel zu mindestens einer Längsachse der zweiten und/oder der der dritten Aufnahme (4, 5) angeordnet ist.

7. Lösbare Kabelverbindung nach einem der vorhergehenden Ansprüche, wobei eine Längsachse des ersten und des zweiten Kontaktglieds (10, 14) parallel oder unter einem vordefinierten Winkel geneigt zueinander angeordnet sind.

8. Lösbare Kabelverbindung nach einem der vorhergehenden Ansprüche, wobei ein Kontaktglied (36), das zu den drei Aufnahmen (2, 5, 49) vorsteht, im Gehäuse angeordnet ist, das Kontaktflächen für zwei Leiter von zwei Kabeln (34, 43) und für einen Stecker (16) vorsieht.

9. Lösbare Kabelverbindung nach einem der vorhergehenden Ansprüche, wobei das Kontaktglied (10, 14) in einem leitenden Käfig (6, 7) angeordnet ist, wobei der Käfig (6, 7) Öffnungen (8, 15) für den Stecker (16) bereitstellt.

10. Lösbare Kabelverbindung nach einem der vorhergehenden Ansprüche, wobei die erste Aufnahme (2) in einer Linie mit der zweiten Aufnahme (4) angeordnet ist.

11. Lösbare Kabelverbindung nach einem der vorhergehenden Ansprüche, wobei das Gehäuse mindestens teilweise eine Hülle (18) umfasst.

12. Lösbare Kabelverbindung nach einem der vorhergehenden Ansprüche, wobei die lösbare Kabelverbindung (1) in einem Behälter (37) angeordnet ist, wobei die zweite und die dritte Aufnahme (4, 5) durch Öffnungen (40) des Behälters (37) hervorstehen, wobei ein Füllmaterial (39) zwischen dem ersten Gehäuse (19) und dem Behälter (37) angeordnet sein kann.

13. Lösbare Kabelverbindung nach Anspruch 12, wobei die lösbare Kabelverbindung (1) in einer tieferen Sektion des Behälters (37) angeordnet ist, wobei eine obere Sektion mit einem Füllglied (53) gefüllt ist.

14. Lösbare Kabelverbindung nach einem der vorhergehenden Ansprüche, wobei eine Kappe (2) die erste Aufnahme (2) abdeckt.

15. Lösbare Kabelverbindung nach einem der vorhergehenden Ansprüche, wobei, in Abhängigkeit von der Struktur des Steckers, eine elektrische Verbindung der Aufnahmen oder eine Isolation von mindestens einer Aufnahme oder eine Erdung von mindestens einer Aufnahme erreicht werden kann.

## Revendications

1. Jonction de câble débranchable (1) avec un boîtier (19) comprenant un matériau isolant, où le boîtier (19) comprend au moins trois fiches femelles (2, 4, 5), où la première fiche femelle (2) est prévue pour recevoir une fiche mâle (16), où les seconde et troisième fiches femelles (4, 5) sont prévues pour fixer les câbles (42, 43) au boîtier reliant un conducteur du câble (42, 43) avec un élément de contact (10, 14), où le boîtier (19) comprend deux éléments de contact (10, 14) séparés, où chaque élément de contact (10, 14) comprend deux faces de contact pour être en contact avec un conducteur d'un câble (42, 43) et avec une fiche mâle (16), où un premier élément de contact (10) jouxte la première fiche femelle (2) et la seconde fiche femelle (4), où le second élément de contact (14) jouxte la première fiche femelle (2) et la troisième fiche femelle (4, 5).

2. Jonction de câble débranchable selon la revendication 1, où en fonction de la structure de la fiche mâle (16), les éléments de contact (10, 14) sont isolés l'un par rapport à l'autre ou reliés électriquement entre eux ou l'un ou les deux peuvent être reliés à un élément externe par exemple des moyens de mise à la terre.

3. Jonction de câble débranchable selon la revendication 1 ou 2, où les fiches femelles (2, 4, 5) sont agencées dans un plan, où les ouvertures de la seconde et la troisième fiche femelle (4, 5) sont dirigées dans des directions opposées ou dans la même direction.

4. Jonction de câble débranchable selon l'une quelconque des revendications précédentes, où chaque axe longitudinal des trois fiches femelles (2, 4, 5) est agencé parallèlement ou où un axe longitudinal de la première fiche femelle (2) est agencé selon un angle supérieur à 10°, par exemple de 90°, par rapport à un axe longitudinal de la seconde et/ou de la troisième fiche femelle (4, 5).

5. Jonction de câble débranchable selon l'une quelconque des revendications précédentes, où une quatrième fiche femelle (49) est agencée, où un élément de contact supplémentaire (25) est agencé, où l'élément de contact supplémentaire (25) ressort de la quatrième fiche femelle (49) par rapport à la première fiche femelle (2), où la quatrième fiche femelle (49) est prévue pour recevoir un conducteur d'un troisième câble.

6. Jonction de câble débranchable selon la revendication 5, où un axe longitudinal de la quatrième fiche femelle (49) est agencé parallèlement à au moins un axe longitudinal de la seconde et/ou de la troisième fiche femelle (4, 5).

7. Jonction de câble débranchable selon l'une quelconque des revendications précédentes, où l'axe longitudinal du premier et second élément de contact (10, 14) sont agencés parallèlement ou de façon inclinée selon un angle prédéfini l'un par rapport à l'autre.

8. Jonction de câble débranchable selon l'une quelconque des revendications précédentes, où un élément de contact (36) est agencé dans le boîtier ressortant vers les trois fiches femelles (2, 5, 49) fournissant des faces de contact pour deux conducteurs de deux câbles (34, 43) et pour une fiche mâle (16).

9. Jonction de câble débranchable selon l'une quelconque des revendications précédentes, où l'élément de contact (10, 14) est agencé dans une cage conductrice (6, 7), où la cage (6, 7) fournit des ouvertures (8, 15) pour la fiche mâle (16).

10. Jonction de câble débranchable selon l'une quelconque des revendications précédentes, où la première fiche femelle (2) est agencée de façon alignée avec la seconde fiche femelle (4).

11. Jonction de câble débranchable selon l'une quelconque des revendications précédentes, où le boîtier comprend au moins en partie une coque (18).

12. Jonction de câble débranchable selon l'une quelconque des revendications précédentes, où la jonction de câble débranchable (1) est agencée dans un conteneur (37), où la seconde et la troisième fiche femelle (4, 5) ressortent à travers les ouvertures (40) du conteneur (37), où un matériau de remplissage (39) peut être agencé entre le premier boîtier (19) et le conteneur (37).

13. Jonction de câble débranchable selon la revendication 12, où la jonction de câble débranchable (1) est agencée dans une section inférieure du conteneur (37), où une section supérieure est remplie d'un élément de remplissage (53).

14. Jonction de câble débranchable selon l'une quelconque des revendications précédentes, où un cache (2) recouvre la première fiche femelle (2).

15. Jonction de câble débranchable selon l'une quelconque des revendications précédentes, où en fonction de la structure de la fiche mâle, une connexion électrique des fiches femelles ou une isolation d'au moins une fiche femelle ou une mise à la terre d'au moins une fiche femelle peut être obtenue.
